# EUROPÄISCHE PATENTSCHRIFT

(11) **EP 0 848 987 B1**
(45) Veröffentlichungstag und Bekanntmachung des Hinweises auf die Patenterteilung: **23.12.1998**
(21) Anmeldenummer: 97121631.2
(22) Anmeldetag: 09.12.1997
(51) Int. Cl.: B01D 63/02, A61M 1/18

(54) **Hohlfasermodul**
Hollow fiber module
Modules à fibres creuses

(30) Priorität: 18.12.1996 DE 19652695
(43) Veröffentlichungstag der Anmeldung: 24.06.1998
(73) Patentinhaber: Saxonia Medical GmbH, 01454 Radeberg (DE)
(72) Erfinder: Lüning, Rudolph, 37083 Göttingen (DE)
(74) Vertreter: Ilberg, Roland W., Dipl.-Ing.

(56) Entgegenhaltungen:
- EP-A- 0 186 293
- EP-A- 0 464 737
- DE-C- 3 805 414

## Beschreibung

Die Erfindung betrifft einen Hohlfasermodul zur Filtration, insbesondere zur Behandlung von Blut, wie Dialyse, Hämofiltration, Oxygenation, Plasmaseparation oder Blutwärmetauscher.

Hohlfasermodule heutiger Bauart bestehen zumeist aus einem rohrförmigen Gehäuse, in das koaxial eine Vielzahl paralleler Hohlfasern eingeführt sind, die mit Ausnahme der offenzuhaltenden Enden der Hohlfasern endseitig mit Vergußmasse miteinander und mit der Gehäuseinnenwand dicht vergossen werden. Die beiden Gehäuseenden sind ferner mit je einer Endkappe abgeschlossen, über die im Falle des Einsatzes als Dialysator die Blutzufuhr und Blutableitung erfolgt. Weiterhin hat das Rohr in Nähe der vergossenen Enden einen Einlaß- und einen Auslaßstutzen für eine Austauschflüssigkeit. Während das Blut durch die Hohlfasern fließt, wird es von der Austauschflüssigkeit, beispielsweise einem Dialysat, umspült, wobei die in diesem Fall mikroporös auszubildenden Hohlfaserwände einen selektiven Stoffaustausch ermöglichen. Wird der Hohlfasermodul als Filtrationsgerät benutzt, so wird ohne Austauschflüssigkeit gearbeitet und die Stutzen dienen als Ablaufwege für das Filtrat.

Die Bestrebungen gehen dahin, eine möglichst große Austauschfläche mit minimalem Blutauffüllvolumen in einem möglichst kleinen Gehäusevolumen unterzubringen, um insbesondere aus Kostengründen die Baugröße der Einweg-Hohlfasermodule möglichst gering zu halten.

Um den Stoff- und/oder Wärmeaustausch zwischen dem in den Hohlfasern geführten Blut und der Austauschflüssigkeit zu maximieren, müssen andererseits die Membranaußenwände der Hohlfasern vollständig und mit nur geringem Strömungswiderstand umspült werden. Dieser Idealzustand ist jedoch bei einer Bündelung von z.B. 500 bis 15000 glatter, elastischer und kreisrunder Hohlfasern je cm² Querschnittsfläche nicht zu erreichen. Die Hohlfasern schmiegen sich aneinander oder haften gar über ihre gesamte Länge aneinander, wodurch sich der Strömungswiderstand erhöht und die Austauschfläche erheblich verkleinert.

Zur Beseitigung dieses Übelstandes, wurde bereits vorgeschlagen, die Hohlfasern mit Längsrippen (DE-OS 28 42 836, DE-OS 29 10 568), Ausbauchungen (DE-OS 28 42 957) oder Ondulierungen (DE-OS 28 42 958, DE-OS 30 09 528) zu extrudieren, bzw. auf die Außenseiten glatter Hohlfasern abstandgebendes Material anzulagern (DE 36 36 583 A1). Weiterhin sind Hohlfasermodule bekannt, die die Hohlfasern in Form eines Vollgeflechts (EP 0 193 946 A2) oder Gewebes (EP 0 285 812 A1) enthalten. Alle genannten Vorschläge sind vom Anmelder ausführlich in der deutschen Patentschrift DE 196 52 695 C1 (veröffentlichte Priorität der vorliegenden Anmeldung) gewürdigt worden, weshalb an dieser Stelle darauf nicht näher eingegangen werden soll.

Eine andere Methode zur Verbesserung des Stoff- oder Wärmeaustauschs besteht darin, daß das Hohlfaserbündel mit Distributionsfäden, die die Hohlfasern untereinander auf Abstand halten, durchmischt ist. Die Herstellung eines solchen Bündels bereitet keinerlei technische Schwierigkeiten und es ist praktisch jede gewünschte Packungsdichte an Hohlfasern erreichbar. Die Distributionsfäden sind entweder feinste Multifilamentfäden mit einer nach außen hin bauschigen Struktur, die allerdings getrennt von den gesponnenen Hohlfasern hergestellt werden müssen (DE 3805414 C1) oder Monofile mit rundem Querschnitt. Für Dialysezwecke werden die Distributionsfäden in einem im weiten Bereich variierbaren Verhältnis zugemischt. Nachteilig an den unter Verwendung monofiler Distributionsfäden gemischten Bündeln ist, daß infolge des verringerten Durchströmungsquerschnittes bei gleichbleibender Durchströmungsleistung der Druckabfall permeatseitig steigt.

Aus der WO 93/19839 ist es bekannt, ein Faserbündel herzustellen, das aus lagenförmig übereinander angeordneten Hohlfasern und zwischen den Hohlfaserlagen angeordneten Distributionsfadenlagen besteht, wobei sich die Hohlfasern und Distributionsfäden an mehreren Stellen überkreuzen. Hierdurch kann der Anteil der Distributionsfäden ohne Leistungsverlust verringert werden. Allerdings ist die Herstellung dieser Lagen technisch aufwendig.

Der vorliegenden Erfindung liegt die Aufgabe zugrunde, ein Hohlfasermodul der eingangs beschriebenen Art zur Verfügung zu stellen, der sich durch große Leistung, kleine Bauweise sowie einfache und damit kostengünstige Herstellung auszeichnet.

Die Aufgabe wird erfindungsgemäß durch die im kennzeichnenden Teil des Anspruchs 1 angegebenen Merkmale gelöst. Vorteilhafte Weiterbildungen sind in den Ansprüchen 2 bis 7 aufgezeigt.

Indem die Distributionsfäden einen profilierten Querschnitt derart aufweisen, daß sich konvexe und konkave Zonen der Außenkontur abwechseln, kann deren Querschnittsfläche erheblich reduziert werden, ohne daß der Abstand der Hohlfasern zueinander sich dadurch verringert. Die Reduzierung des Querschnitts ermöglicht eine bessere und vor allem hervorragend kanalisierte, gleichmäßige Umspülung der Hohlfasern bei verringertem Strömungswiderstand und somit einen größeren Wirkungsgrad bei vorgegebener Größe eines Hohlfasermoduls.

Profilierte Distributionsfäden lassen sich wesentlich einfacher herstellen als etwa profilierte Hohlfasern, da hier die Gefahr von Fehlstellen, das heißt Rissen oder Löchern, in der Hohlfasermembran nicht vorhanden ist. Weiterhin besteht nicht der systembedingte Nachteil, daß die über die ganze Länge des Hohlfasermoduls profilierten Bereiche die wirksame Austausch-Oberfläche der Hohlfasern vermindern.

Nach einer bevorzugten Ausführung ist das Außenprofil im Querschnitt kreisrund und mit zacken- bzw. rippenförmigen Abstrebungen ausgestaltet.

In weiterer Ausgestaltung streben mindestens 4 Zacken oder Rippen radial vom Fadenkern ab.

Die maximale Querschnittserstreckung der Distributionsfäden, gemessen diagonal über die Spitzen, entsprechen nach einer weiteren Ausführung maximal dem Durchmesser der Hohlfasern.

Weiterhin können die Distributionsfäden zusätzlich über ihre Länge gewellt oder gelockt sein.

Vorzugsweise werden Hohlfasern und Distributionsfäden in einem im weiten Bereich variierbaren Verhältnis gemischt, um die Packungsdichte der Hohlfasern im Hohlfasermodul entsprechend den jeweiligen Anforderungen zu ändern.

Eine bevorzugtes Anwendungsgebiet des erfindungsgemäßen Hohlfasermoduls ist die Hämodialyse.

Die Erfindung soll anhand eines Ausführungsbeispiels näher erläutert werden. In der zugehörigen Zeichnung zeigt:
- Fig. 1: einen Schnitt durch ein Hohlfasermodul (Prinzipskizze), geeignet für Hämodialyse.
- Fig. 2a bis 2c: verschiedene Ausgestaltungsformen des Außenprofils von Distributionsfäden.

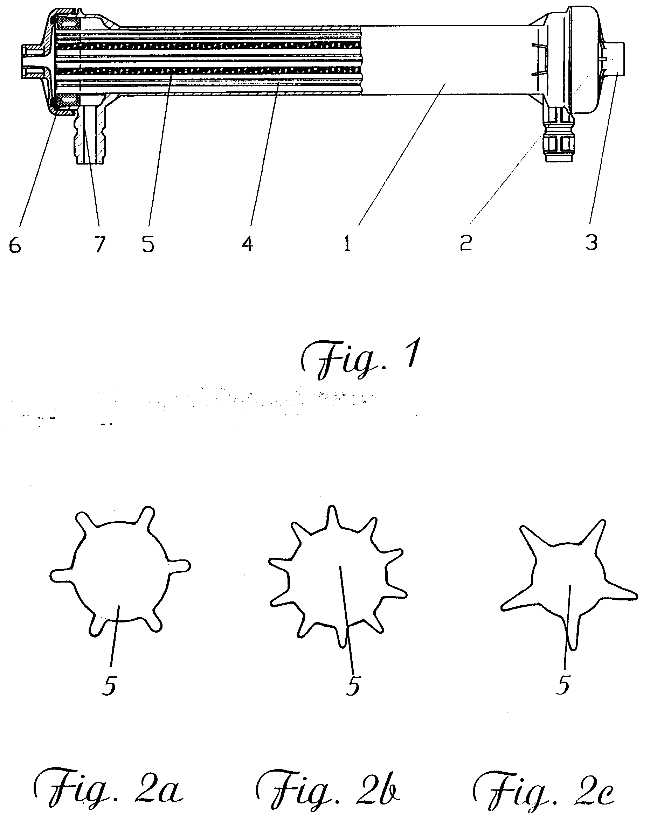

Das in Fig. 1 dargestellte Hohlfasermodul besteht aus einem zylindrischen Gehäuse 1, das jeweils endseitig mittels Endkappen 2 abgedichtet ist. Die Endkappen 2 sind jeweils mit Anschlußstutzen 3 versehen, die koaxial zum zylindrischen Gehäuse 1 liegen. In dem Gehäuse 1 sind im wesentlichen parallel zueinander eine Vielzahl von Hohlfasern 4 und Distributionsfäden 5 gut durchmischt untergebracht. Deren Enden sind jeweils miteinander und zur Innenwand des Gehäuses 1 durch Vergußmasse 6 dicht vergossen, wobei die Hohlfasern 4 selbst jedoch stirnseitig offen bleiben und so von einem Anschlußstutzen 3 zum anderen Anschlußstutzen 3 vom Blut durchströmt werden können. Zur Bildung eines zweiten Durchströmungsraumes sind in die Wand des Gehäuses 1 zwei weitere Anschlußstutzen 7 radial abstehend eingeformt, die als Dialysateinlaß und Dialysatauslaß dienen.

Die Hohlfasern 4 haben einen kreisringförmigen Querschnitt und über ihre Länge eine gleichmäßige lichte Weite, wodurch das Blut schonend hindurchgeleitet werden kann. Sie haben ferner eine einheitliche Wanddicke und einen einheitlichen Außendurchmesser. Die Wände der Hohlfasern 4 sind semipermeabel und somit für einen Stoffaustausch geeignet. Vornehmlich werden aus dem zu dialysierenden Blut des Patienten durch die Wände der Hohlfasern 4 hindurch die zu eleminierenden harnpflichtigen Substanzen und Wasser entzogen und mit dem Dialysat abgeführt. Der Porendurchmesser in den Membranwänden der Hohlfasern 4 beträgt etwa 1,5 bis 2 Nanometer, der Außendurchmesser der Hohlfasern beträgt beispielsweise 150 bis 400 Mikrometer, die Wandstärke 2 bis 50 Mikrometer. Die Hohlfasern 4 bestehen aus synthetischem Material, beispielsweise Polyacrylnitril, oder sind Naturfaserprodukte, wie reine Cellulose oder Celluloseacetat.

Verteilt zwischen mehreren Tausend Hohlfasern 4 je Hohlfasermodul liegen die Distributionsfäden 5. Ihr Durchmesser über die Spitzen ist erheblich kleiner, höchstens aber gleich dem Durchmesser der Hohlfasern 4 und ihre Anzahl ist so auf die Anzahl der Hohlfasern 4 abgestimmt, daß sich eine Packungsdichte an Hohlfasern von 30% bis 40% innerhalb des Gehäuses 1 ergibt. Die Distributionsfäden 5 können aus demselben Material wie die Hohlfasern 4, aber auch aus unterschiedlichem Material bestehen. Vorteilhafterweise kann mit jeder dritten Düse eines Spinndüsenblocks zugleich mit den Hohlfasern 4 ein Distributionsfaden 5 der oben beschriebenen Art hergestellt werden.

Fig. 2 zeigt verschiedene Formen des Querschnitts von Distributionsfäden 5, die sich allesamt sehr leicht und ohne Aufwand mit einer entsprechenden Spinndüse, beispielsweise aus einer Cellulose-Spinnlösung, extrudieren lassen.

In Fig. 2a ist ein kreisförmiger Querschnitt gezeigt, von dem sechs Rippen so abstreben, daß eine anliegende Hohlfaser 4 maximal zwei Rippenspitzen berührt, nicht aber den Kerndurchmesser. Dadurch verbleibt genügend Raum zur freien Umspülung der Hohlfasern 4 mit Dialysat.

In Fig. 2b ist ein kreisförmiger Querschnitt mit zehn radialen Rippen dargestellt.

In Fig. 2c ist ein weiterer Querschnitt dargestellt, der sich durch einen verhältnismäßig kleinen Kerndurchmesser und fünf entsprechend längeren Zacken auszeichnet.

Natürlich ist der Gegenstand der Erfindung nicht auf die dargestellten Ausführungsformen begrenzt, sondern umfaßt alle zweckmäßig profilierten und ggf. gewellten oder gedrillten Distributionsfäden.

## Patentansprüche

1. Hohlfasermodul zur Filtration, insbesondere zur Behandlung von Blut, mit einem in einem röhrenförmigen Gehäuse (1) eingegossenen durchmischten Bündel aus parallel zueinander verlaufenden Hohlfasern (4) und monofilen Distributionsfäden (5), **dadurch gekennzeichnet**, daß die Distributionsfäden (5) einen profilierten Querschnitt aufweisen.

2. Hohlfasermodul nach Anspruch 1, **dadurch gekennzeichnet**, daß die Distributionsfäden (5) einen im wesentlichen kreisrunden Querschnitt mit davon abstrebenden Zacken oder Rippen aufweisen.

3. Hohlfasermodul nach Anspruch 1 und 2, **dadurch gekennzeichnet**, daß die Distributionsfäden (5) im Querschnitt mehrzackig bzw. mehrrippig ausgebildet sind.

4. Hohlfasermodul nach einem der vorhergehenden Ansprüche, **dadurch gekennzeichnet**, daß die Querschnittserstreckung der Distributionsfäden (5) maximal dem Durchmesser der Hohlfasern (4) entspricht.

5. Hohlfasermodul nach einem der vorhergehenden Ansprüche, **dadurch gekennzeichnet**, daß die Distributionsfäden (5) über ihre Länge gewellt und/oder gedrillt sind.

6. Hohlfasermodul nach einem der vorhergehenden Ansprüche, **dadurch gekennzeichnet**, daß Hohlfasern (4) und Distributionsfäden (5) in einem die Packungsdichte der Hohlfasern (4) veränderlichen Verhältnis mischbar sind.

7. Hohlfasermodul nach einem der vorhergehenden Ansprüche, **gekennzeichnet durc**h die Anwendung zur Hämodialyse.

## Claims

1. Hollow fibre module for filtration, in particular for the treatment of blood, having an intermixed bundle of hollow fibres (4) extending parallel to one another and monofil distribution filaments (5), which bundle is fused within a tubular housing (1), characterized in that the distribution filaments (5) have a profiled cross-section.

2. Hollow fibre module according to Claim 1, characterized in that the distribution filaments (5) have a substantially circular cross-section with serrations or ribs projecting therefrom.

3. Hollow fibre module according to Claims 1 and 2, characterized in that the distribution filaments (5) are designed to be multiserrated or multiribbed in cross-section.

4. Hollow fibre module according to one of the preceding claims, characterized in that the extent of the cross-section of the distribution filaments (5) corresponds to no more than the diameter of the hollow fibres (4).

5. Hollow fibre module according to one of the preceding claims, characterized in that the distribution filaments (5) are corrugated and/or twisted over their length.

6. Hollow fibre module according to one of the preceding claims, characterized in that hollow fibres (4) and distribution filaments (5) can be mixed in a ratio to vary the packing density of the hollow fibres (4).

7. Hollow fibre module according to one of the preceding claims, characterized by application for haemodialysis.

## Revendications

1. Modules à fibres creuses pour la filtration, en particulier pour le traitement du sang, avec un faisceau intimement mélangé faisant corps dans un boîtier tubulaire (1), en fibres creuses (4) se développant parallèlement les unes aux autres et en fils de distribution (5) monofilaires, caractérisés en ce que les fils de distribution (5) ont une section transversale profilée.

2. Modules à fibres creuses selon la revendication 1,
caractérisés en ce que
les fils de distribution (5) ont une section transversale circulaire avec des dents ou nervures de raidissement.

3. Modules à fibres creuses selon les revendications 1 et 2,
caractérisés en ce que
les fils de distribution (5) sont réalisés en section transversale à plusieurs dents ou à plusieurs nervures.

4. Modules à fibres creuses selon une des revendications précédentes,
caractérisés en ce que
le développement de section transversale des fils de distribution (5) correspond au maximum au diamètre des fibres creuses (4).

5. Modules à fibres creuses selon une des revendications précédentes,
caractérisés en ce que
les fils de distribution (5) sont ondulés ou croisés sur leur longueur.

6. Modules à fibres creuses selon une des revendications précédentes,
caractérisés en ce que
des fibres creuses (4) et des fils de distribution (5) peuvent être mélangés dans un rapport changeant la densité de tassement des fibres creuses (4).

7. Modules à fibres creuses selon une des revendications précédentes,
caractérisés par
l'utilisation pour l'hémodialyse.
